(19) Europäisches Patentamt
European Patent Office
Office européen des brevets

(11) **EP 3 527 449 B1**

(12) **EUROPEAN PATENT SPECIFICATION**

(45) Date of publication and mention
of the grant of the patent:
**20.01.2021 Bulletin 2021/03**

(51) Int Cl.:
***B60W 30/14*** *(2006.01)*          ***B60W 30/18*** *(2012.01)*
***B60W 30/16*** *(2020.01)*          ***B60R 21/00*** *(2006.01)*
***B60W 30/08*** *(2012.01)*

(21) Application number: **17860259.5**

(22) Date of filing: **10.10.2017**

(86) International application number:
**PCT/JP2017/036675**

(87) International publication number:
**WO 2018/070380 (19.04.2018 Gazette 2018/16)**

(54) **VEHICLE CONTROL APPARATUS**

FAHRZEUGSTEUERUNGSVORRICHTUNG

APPAREIL DE COMMANDE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2016 JP 2016201773**

(43) Date of publication of application:
**21.08.2019 Bulletin 2019/34**

(73) Proprietor: **Mazda Motor Corporation
Aki-gun
Hiroshima 730-8670 (JP)**

(72) Inventor: **OHMURA, Hiroshi
Aki-gun
Hiroshima 730-8670 (JP)**

(74) Representative: **Müller-Boré & Partner
Patentanwälte PartG mbB
Friedenheimer Brücke 21
80639 München (DE)**

(56) References cited:
WO-A1-2012/172591          DE-A1- 10 328 755
DE-A1-102014 012 781        DE-A1-102014 215 274
JP-A- 2006 195 729          JP-A- 2010 173 349
JP-A- 2016 011 030

## Description

### TECHNICAL FIELD

The invention relates to a vehicle control apparatus for supporting driving of a vehicle by a driver.

### BACKGROUND ART

Conventionally, as driving support for a vehicle by a driver, there is proposed a driving support apparatus for a vehicle, which is configured to determine whether or not passing a preceding vehicle is suspended (see Patent Literature 1). The apparatus described in Patent Literature 1 determines whether or not passing is suspended depending on a vehicle speed difference and a distance between a succeeding vehicle traveling on a passing lane behind an own vehicle, and the own vehicle, a vehicle speed of a target vehicle ahead of the own vehicle, and the like.

DE 10 2014 012 781 A1 discloses a lane change assistant that detects the distance and relative speed between the own vehicle and a following vehicle and which calculates a lane change risk.

### CITATION LIST

### PATENT LITERATURE

Patent Literature 1: Japanese Unexamined Patent Application Publication No. 2016-9200

### SUMMARY OF INVENTION

When passing a target vehicle ahead of an own vehicle is not suspended, the own vehicle is supposed to cut in ahead of the target vehicle when returning to a driving lane, after passing the target vehicle on a passing lane. In this case, it is desired that a driver of the target vehicle passed by the own vehicle feels safe. In the apparatus described in Patent Literature 1, however, this point is not fully considered.

An object of the present invention is to control a vehicle in such a way that a driver of a target vehicle passed by an own vehicle feels safe, when the own vehicle passes the target vehicle ahead of the own vehicle.

In order to solve the above-described problem, according to the present invention there is provided a vehicle control apparatus for controlling traveling of an own vehicle, the vehicle control apparatus including:

  a vehicle detector that detects a first target vehicle, and detects a first own vehicle distance between the first target vehicle and the own vehicle, the first target vehicle traveling on an adjacent lane adjacent to a driving lane on which the own vehicle is traveling in a same direction as the own vehicle;
  a calculator that calculates a relative speed of the own vehicle to the first target vehicle, based on a change in the first own vehicle distance;
  a curve setting portion that virtually sets a first curve at a position ahead of the first target vehicle, when the first target vehicle traveling on the adjacent lane is detected on a side of the own vehicle or behind the own vehicle, the first curve representing a lower limit relative speed determined in association with a distance from the first target vehicle; and
  a vehicle controller that causes the own vehicle to travel at a relative speed not lower than a relative speed to the first target vehicle, which is determined by the first curve depending on the first own vehicle distance, when the own vehicle changes from the driving lane to the adjacent lane at a position ahead of the first target vehicle.

According to the vehicle control apparatus, it is possible to control the own vehicle in such a way that a driver of the first target vehicle passed by the own vehicle feels safe.

These and other objects, features and advantages of the present invention will become more apparent upon reading the following detailed description along with the accompanying drawings.

### BRIEF DESCRIPTION OF DRAWINGS

  FIG. 1 is a block diagram schematically illustrating a configuration of a vehicle including a vehicle control apparatus according to the present embodiment.
  FIG. 2 is a diagram schematically illustrating detection areas of radars and the like included in the vehicle illustrated in FIG. 1.
  FIG. 3 is a diagram for describing a calculation formula of an allowable relative speed.
  FIG. 4 is a diagram schematically illustrating an example of an allowable relative speed curve set around a vehicle.
  FIG. 5 is a plan view when a target vehicle is viewed from above, and schematically illustrating an example of allowable relative speeds set at a position ahead of the target vehicle.
  FIG. 6 is a diagram when a traveling target vehicle is viewed from a side, and schematically illustrating allowable relative speeds set at positions ahead and behind the target vehicle.
  FIG. 7 is a diagram describing cut-in control of a vehicle ahead of a target vehicle.
  FIG. 8 is a flowchart schematically illustrating an example of a setting operation of an allowable relative speed curve of a vehicle.
  FIG. 9 is a flowchart schematically illustrating an example of an operation of cut-in control of a vehicle.

**DESCRIPTION OF EMBODIMENTS**

In the following, an embodiment of the present invention is described with reference to the drawings. In each of the drawings, same elements are indicated with same reference numbers, and description thereof is omitted as necessary.

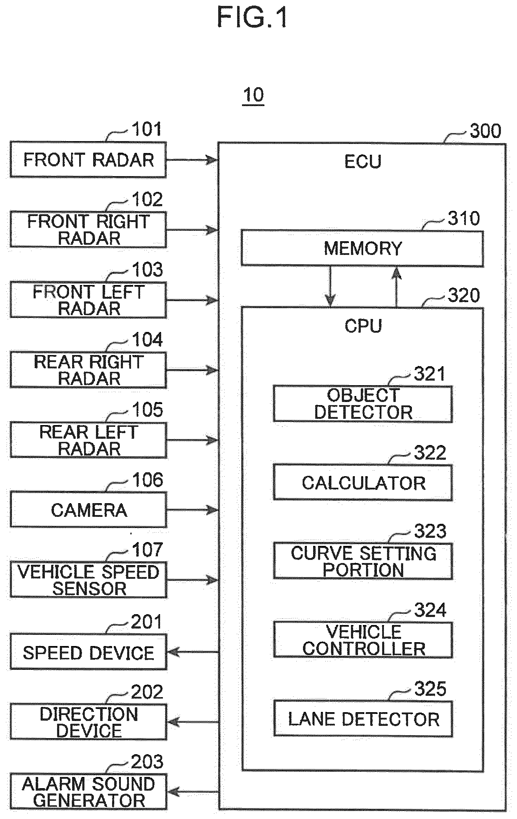

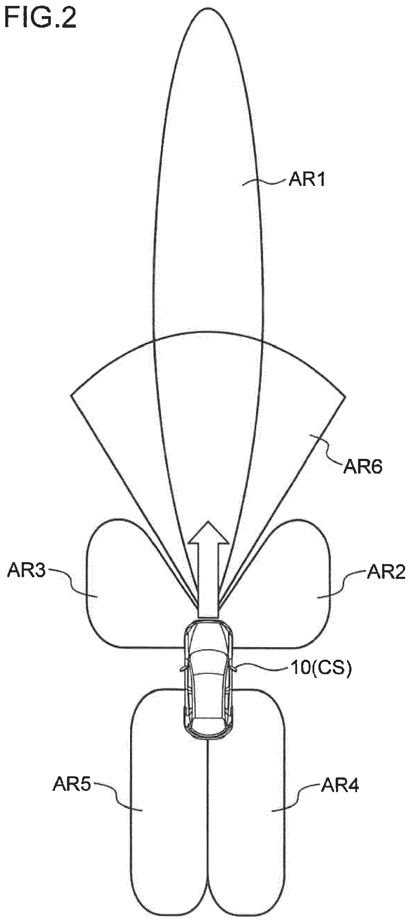

FIG. 1 is a block diagram schematically illustrating a configuration of a vehicle including a vehicle control apparatus in the present embodiment. FIG. 2 is a diagram schematically illustrating detection areas of radars and the like included in the vehicle illustrated in FIG. 1. A vehicle 10 is a 4-wheel automobile, for example. As illustrated in FIG. 1, the vehicle 10 includes a front radar 101, a front right radar 102, a front left radar 103, a rear right radar 104, a rear left radar 105, a camera 106, a vehicle speed sensor 107, a speed device 201, a direction device 202, an alarm sound generator 203, and an electronic control unit (ECU) 300.

Each of the radars 101 to 105 transmits a radio wave such as a millimeter wave or a microwave for example, receives a reflection wave acquired by reflection of a transmission wave onto an object, and detects an object around the vehicle 10. In each of the radars 101 to 105, it is possible to use a frequency band in which an object around the vehicle 10 is detectable, in addition to a millimeter wave or a microwave. Each of the radars 101 to 105 outputs reception data indicating a reflection wave to the ECU 300.

The front radar 101 transmits a transmission wave toward the front side of the vehicle 10. The front radar 101 detects a target object located in a detection area AR1 (FIG. 2) in front of the vehicle 10 (hereinafter, also referred to as an "own vehicle CS"), the target object being a target vehicle traveling ahead of the vehicle 10 in the same direction as the vehicle 10, for instance.

The front right radar 102 transmits a transmission wave forwardly rightward of the vehicle 10. The front right radar 102 detects a target object located in a detection area AR2 (FIG. 2) on the front right side of the vehicle 10 (own vehicle CS), the target object being a target vehicle traveling ahead of the vehicle 10 in the same direction as the vehicle 10 on an adjacent lane adjacent to the right of a driving lane of the vehicle 10, an opposing vehicle traveling in a direction opposite to the vehicle 10 on an opposing lane adjacent to the right of the driving lane of the vehicle 10, and the like, for example.

The front left radar 103 transmits a transmission wave forwardly leftward of the vehicle 10. The front left radar 103 detects a target object located in a detection area AR3 (FIG. 2) on the front left side of the vehicle 10 (own vehicle CS), the target object being a target vehicle traveling ahead of the vehicle 10 in the same direction as the vehicle 10 on an adjacent lane adjacent to the left of a driving lane of the vehicle 10, a target vehicle stopping at an edge of a road, a pedestrian walking on the left side of the driving lane, and the like, for example.

The rear right radar 104 transmits a transmission wave rearwardly rightward of the vehicle 10. The rear right radar 104 detects a target object located in a detection area AR4 (FIG. 2) on the rear right side of the vehicle 10 (own vehicle CS), the target object being a target vehicle traveling behind the vehicle 10 in the same direction as the vehicle 10 on an adjacent lane adjacent to the right of the vehicle 10, a target vehicle traveling in a direction opposite to the vehicle 10 on an adjacent lane adjacent to the right of the vehicle 10 and that has passed the vehicle 10, and the like, for example.

The rear left radar 105 transmits a transmission wave rearwardly leftward of the vehicle 10. The rear left radar 105 detects a target object located in a detection area AR5 (FIG. 2) on the rear left side of the vehicle 10 (own vehicle CS), the target object being a target vehicle traveling behind the vehicle 10 in the same direction as the vehicle 10 on an adjacent lane adjacent to the left of the vehicle 10, a target vehicle stopping at an edge of a road, and the like, for example.

The front radar 101 is configured to be able to detect a target object away from the vehicle 10 by about 100 to 200 m, for example. The front right radar 102, the front left radar 103, the rear right radar 104, and the rear left radar 105 are configured to be able to detect a target object away from the vehicle 10 by up to about 50 m, for example.

The camera 106 is mounted near a rear view mirror on an upper portion of a vehicle compartment of the vehicle 10 in such a way that an optical axis of the camera 106 is directed toward the front side of the vehicle 10, for example. The camera 106 captures an image within a fan-shaped imaging area AR6 (FIG. 2) in front of the vehicle 10 (own vehicle CS) every predetermined time (e.g. 1/60 sec), for example. The camera 106 outputs, to the ECU 300, captured image data every predetermined time (e.g. 1/60 sec). A vehicle present within the imaging area AR6 (FIG. 2), a pedestrian walking near a driving lane, a borderline (e.g. an intermittently drawn white line) drawn on a road and representing a border between lanes, and the like are detected by template matching for example, based on image data to be output from the camera 106.

The vehicle speed sensor 107 detects a traveling speed of the vehicle 10. The vehicle speed sensor 107 outputs, to the ECU 300, a detected traveling speed of the vehicle 10.

The speed device 201 includes a fuel injection device, a brake device, and the like, and accelerates, decelerates, or stops the vehicle 10. The direction device 202 includes a steering device and the like, and controls a traveling direction of the vehicle 10. In the present embodiment, the speed device 201 and the direction device 202 are operated by a driver of the vehicle 10, or controlled by the ECU 300. The alarm sound generator 203 includes an electronic buzzer for example, and generates an alarm sound to a driver.

The ECU 300 controls an overall operation of the vehicle 10. The ECU 300 includes a memory 310, a central processing unit (CPU) 320, and other peripheral circuits. The memory 310 is constituted of a semiconductor memory such as a flash memory, a hard disk, or another storage element, for example. The memory 310 includes a frame memory for temporarily storing image data output from the camera 106, a memory for storing a program, and a memory for temporarily storing data. The memory 310 may be constituted of a single memory including an area for temporarily storing image data output from the camera 106, an area for storing a program, and an area for temporarily storing data.

The CPU 320 functions as an object detector 321, a calculator 322, a curve setting portion 323, a vehicle controller 324, and a lane detector 325 by being operated in accordance with a program stored in the memory 310.

The object detector 321 (an example of the vehicle detector) detects a target object (e.g. a vehicle) using reception data indicating a reflection wave to be output from each of the radars 101 to 105, and detects a distance between the vehicle 10 and the detected target object. Specifically, for example, the object detector 321 detects presence or absence of a target vehicle located in the detection area AR1 (FIG. 2), and traveling in the same direction as the vehicle 10, for example, using reception data indicating a reflection wave to be output from the front radar 101. The object detector 321 detects a distance (an own vehicle distance) between the vehicle 10 and a target vehicle using reception data indicating a reflection wave to be output from the front radar 101, when the target vehicle is detected in the detection area AR1 (FIG. 2).

The object detector 321 detects presence or absence of a preceding vehicle located in the detection area AR2 (FIG. 2), and traveling in the same direction as the vehicle 10 on an adjacent lane adjacent to the right of a driving lane of the vehicle 10, for example, using reception data indicating a reflection wave to be output from the front right radar 102. The object detector 321 detects a distance (an own vehicle distance) between the vehicle 10 and a preceding vehicle using reception data indicating a reflection wave to be output from the front right radar 102, when the preceding vehicle is detected in the detection area AR2 (FIG. 2).

The object detector 321 detects presence or absence of a preceding vehicle located in the detection area AR3 (FIG. 2), and traveling in the same direction as the vehicle 10 on an adjacent lane adjacent to the left of a driving lane of the vehicle 10, for example, using reception data indicating a reflection wave to be output from the front left radar 103. The object detector 321 detects a distance (an own vehicle distance) between the vehicle 10 and a preceding vehicle using reception data indicating a reflection wave to be output from the front left radar 103, when the preceding vehicle is detected in the detection area AR3 (FIG. 2).

The object detector 321 detects presence or absence of a target vehicle located in the detection area AR4 (FIG. 2), and traveling behind the vehicle 10 in the same direction as the vehicle 10 on an adjacent lane adjacent to the left of a driving lane of the vehicle 10, for example, using reception data indicating a reflection wave to be output from the rear right radar 104. The object detector 321 detects a distance (an own vehicle distance) between the vehicle 10 and a target vehicle using reception data indicating a reflection wave to be output from the rear right radar 104, when the target vehicle is detected in the detection area AR4 (FIG. 2).

The object detector 321 detects presence or absence of a target vehicle located in the detection area AR5 (FIG. 2), and traveling behind the vehicle 10 in the same direction as the vehicle 10 on an adjacent lane adjacent to the left of a driving lane of the vehicle 10, for example, using reception data indicating a reflection wave to be output from the rear left radar 105. The object detector 321 detects a distance (an own vehicle distance) between the vehicle 10 and a target vehicle using reception data indicating a reflection wave to be output from the rear left radar 105, when the target vehicle is detected in the detection area AR5 (FIG. 2).

The lane detector 325 detects a borderline (e.g. an intermittently drawn white line) drawn on a road and representing a border between lanes based on image data to be output from the camera 106, by template matching for example.

The calculator 322 calculates a relative speed of the vehicle 10 to a target vehicle, based on a change in distance between the vehicle 10 and the target vehicle detected every predetermined time (e.g. 50 msec) by the object detector 321.

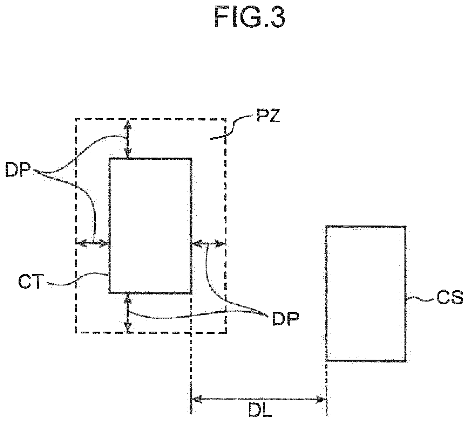

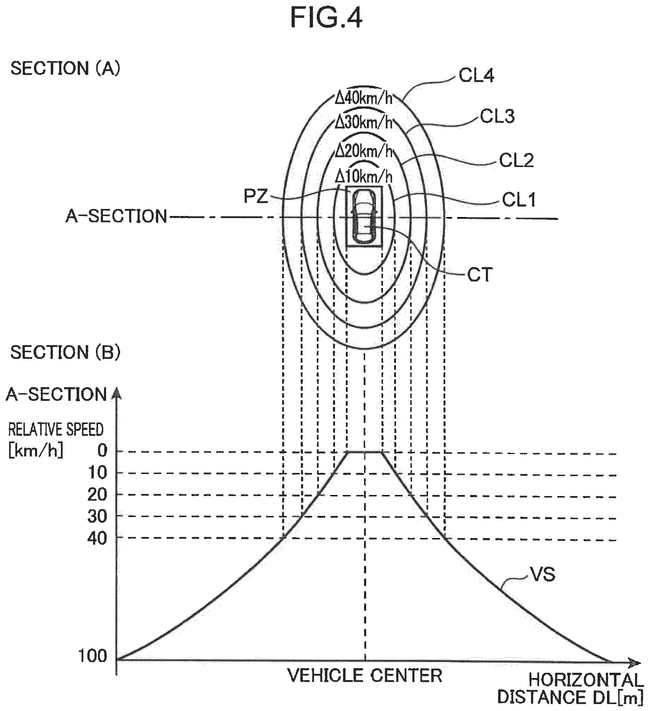

The curve setting portion 323 virtually sets an allowable relative speed curve around a target object (e.g. a vehicle) detected by the object detector 321. An allowable relative speed curve to be virtually set around a target object by the curve setting portion 323 is described with reference to FIGS. 3 and 4.

FIG. 3 is a diagram for describing a calculation formula of an allowable relative speed. FIG. 4 is a diagram schematically illustrating an example of an allowable relative speed curve, which is virtually set around a vehicle.

FIG. 3 illustrates an own vehicle CS, and a target vehicle CT as an example of a target object detected by the object detector 321. The target vehicle CT is traveling ahead of the own vehicle CS in the same direction as the own vehicle CS. A horizontal distance DL is a distance between the target vehicle CT and the own vehicle CS in a horizontal direction. A relative speed zero area PZ is set around the target vehicle CT. In the present embodiment, a set distance DP of the relative speed zero area PZ is 0.5 m, for example.

An allowable relative speed is an upper limit relative speed allowed for the own vehicle CS, which is determined in association with the horizontal distance DL between the own vehicle CS and the target vehicle CT, when the own vehicle CS is traveling near the target vehicle CT. While the target vehicle CT is stopping, the allowable relative speed is an upper limit speed of the own vehicle CS, which is allowed for the own vehicle CS. In the present embodiment, an upper limit relative speed Vsop, which is allowed for the own vehicle CS traveling near the target vehicle CT, is calculated by the following formula (1) using the set distance DP and the horizontal distance DL, for example.

$$Vsop = K(DL^2 - DP^2) \qquad (1)$$

In formula (1), K is a predetermined coefficient. The coefficient K may be determined experimentally, or may be determined by trial and error. As is clear from formula (1), when the horizontal distance DL is equal to the set distance DP, the allowable upper limit relative speed Vsop is 0 (zero). Specifically, the own vehicle CS cannot travel (pass) a position away from the target vehicle CT by the set distance DP.

The section (A) of FIG. 4 is a plan view when the target vehicle CT is viewed from above, and schematically illustrating an allowable relative speed, which is virtually set around the target vehicle CT. The section (B) of FIG. 4 is a diagram schematically illustrating a curve representing an upper limit relative speed on the A-section in the section (A) of FIG. 4.

In the section (A) of FIG. 4, allowable upper limit relative speeds are illustrated planarly and stepwisely in order to facilitate understanding of allowable upper limit relative speeds. Actually, however, as illustrated in formula (1) and the section (B) of FIG. 4, an allowable upper limit relative speed VS is set as a quadratic function curve with respect to the horizontal distance DL from the target vehicle CT.

Specifically, the allowable upper limit relative speed VS, which is set for the target vehicle CT, has a flat summit associated with the relative speed zero area PZ including the target vehicle CT as a center, and is formed into a three-dimensional mountain shape having a quadratic function slope. The allowable upper limit relative speed VS at the flat summit associated with the relative speed zero area PZ is 0 (zero). Contour lines of a mountain representing the allowable upper limit relative speed VS indicate that the set relative speed VS is a uniform speed. As a contour line of the mountain representing the allowable upper limit relative speed VS is lowered (in other words, is farther away from the target vehicle CT), the allowable upper limit relative speed VS increases.

Ellipses in the section (A) of FIG. 4 represent the contour lines of the mountain in the section (B) of FIG. 4. Specifically, a contour line CL1 represents a relative speed 10 [km/h], a contour line CL2 represents a relative speed 20 [km/h], a contour line CL3 represents a relative speed 30 [km/h], and a contour line CL4 represents a relative speed 40 [km/h]. Each of the contour lines CL1 to CL4 is an example of the second curve.

Referring back to FIG. 1, when the own vehicle CS catches up with the target vehicle CT detected by the object detector 321, the curve setting portion 323 sets an allowable lower limit relative speed, in place of the allowable upper limit relative speed, in an allowable relative speed curve set at a position ahead of the target vehicle CT.

Specifically, the object detector 321 detects that the own vehicle CS has caught up with the target vehicle CT, based on reception data indicating a reflection wave to be output from the rear left radar 105, for example. The object detector 321 notifies the curve setting portion 323 that the own vehicle CS has caught up with the target vehicle CT. When being notified from the object detector 321 that the own vehicle CS has caught up with the target vehicle CT, the curve setting portion 323 sets an allowable lower limit relative speed in an allowable relative speed curve set at a position ahead of the target vehicle CT.

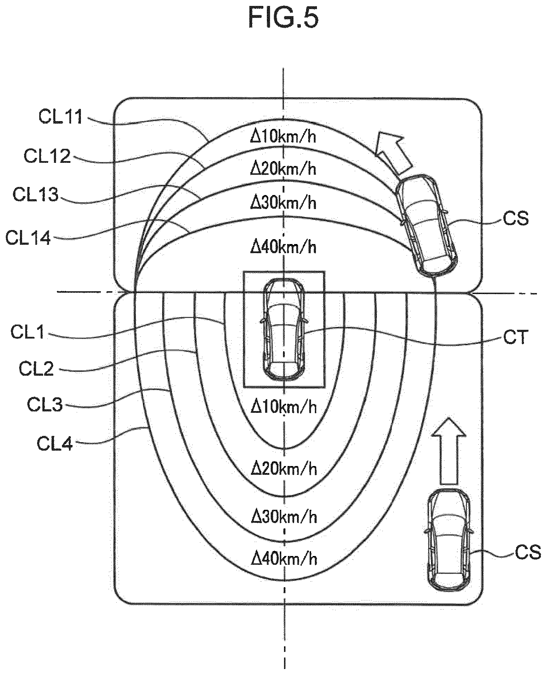

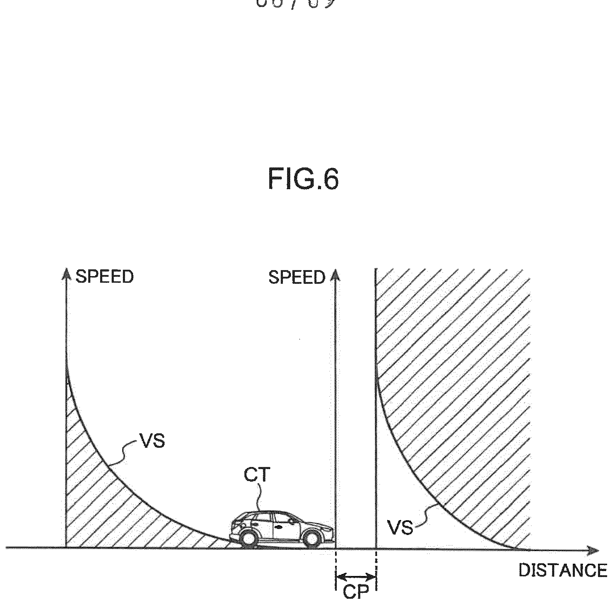

An allowable lower limit relative speed, which is set at a position ahead of the target vehicle CT by the curve setting portion 323, is described with reference to FIGS. 5 and 6.

FIG. 5 is a plan view when the target vehicle CT is viewed from above, and schematically illustrating an example of an allowable relative speed set at a position ahead of the target vehicle CT. FIG. 6 is a diagram when the traveling target vehicle CT is viewed from a side, and schematically illustrating allowable relative speeds set at positions ahead and behind the target vehicle CT.

In a case where the own vehicle CS attempts to cut in ahead of the target vehicle CT located ahead of the own vehicle CS, and when a distance between the target vehicle CT and the own vehicle CS is short, a driver of the target vehicle CT may feel uneasy unless a relative speed of the own vehicle CS to the target vehicle CT is high. In view of the above, in the present embodiment, as illustrated in FIG. 5, the curve setting portion 323 sets, at a position ahead of the target vehicle CT, an allowable relative speed, in which an allowed relative speed of the own vehicle CS to the target vehicle CT increases as a distance between the target vehicle CT and the own vehicle CS decreases.

In FIG. 5, halved ellipses at a position behind the target vehicle CT represent contour lines CL1 to CL4 similar to the section (A) of FIG. 4. Although halved ellipses at a position ahead of the target vehicle CT are different in shape, they are contour lines representing equal relative speeds similar to FIG. 4. Specifically, a contour line CL11 represents a relative speed 10 [km/h], a contour line CL12 represents a relative speed 20 [km/h], a contour line CL13 represents a relative speed 30 [km/h], and a contour line CL14 represents a relative speed 40 [km/h]. Each of the contour lines CL11 to CL14 is an example of the first curve.

In FIG. 6, an allowable relative speed VS set at a position behind the target vehicle CT (on the left side of the target vehicle CT in FIG. 6) is, specifically, an allowable upper limit relative speed, as described with reference to FIGS. 3 and 4. On the other hand, in FIG. 6, an allowable relative speed VS set at a position ahead of the target vehicle CT (on the right side of the target vehicle CT in FIG. 6) is an allowable lower limit relative speed.

In FIG. 6, cut-in is prohibited within a cut-in prohibit distance CP (in the present embodiment, e.g. 2 m), which is set at a position immediately ahead of the target vehicle CT. It is conceived that a driver of the target vehicle CT may feel uneasy when the own vehicle attempts to cut in ahead of the target vehicle CT in a range corresponding to the cut-in prohibit distance CP, even if a relative speed of the own vehicle CS to the target vehicle CT is high, since a distance to the target vehicle CT is short. In view of the above, the own vehicle CS is prohibited from cutting in ahead of the target vehicle CT in a range corresponding to the cut-in prohibit distance CP, regardless of a relative speed of the own vehicle CS to the target vehicle CT.

Referring back to FIG. 1, the vehicle controller 324 supports driving of the vehicle 10 by a driver. Specifically, the vehicle controller 324 controls cut in of the vehicle 10 ahead of a target vehicle. The cut-in control of the vehicle 10 ahead of a target vehicle by the vehicle controller 324 is described with reference to FIGS. 5 to 7.

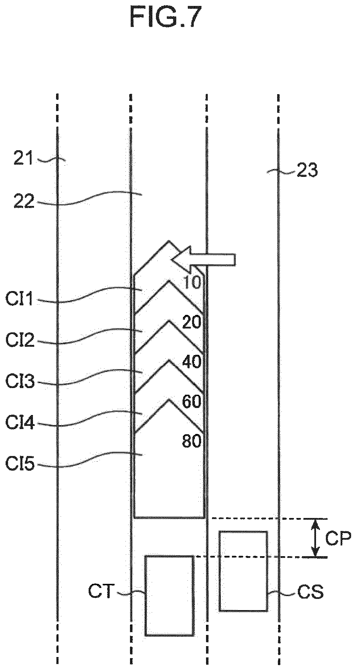

FIG. 7 is a diagram describing cut-in control of the vehicle 10 ahead of a target vehicle. FIG. 7 illustrates driving lanes 21 and 22, and a passing lane 23. FIG. 7 illustrates a state immediately after the own vehicle CS traveling on the passing lane 23 has passed the target vehicle CT traveling on the driving lane 22.

The own vehicle CS does not have to follow speed limits by an allowable relative speed curve, which is set around the target vehicle CT traveling on an adjacent lane (the driving lane 22 in FIG. 7), as long as the own vehicle CS is traveling on a current lane (the passing lane 23 in FIG. 7). Specifically, the vehicle controller 324 does not have to observe an allowable relative speed set around the target vehicle CT.

On the other hand, when changing from the passing lane 23 to the driving lane 22, the own vehicle CS has to follow speed limits by an allowable relative speed curve set at a position ahead of the target vehicle CT. Specifically, the vehicle controller 324 has to observe an allowable relative speed set at a position ahead of the target vehicle CT.

Specifically, in FIG. 7, when a relative speed of the own vehicle CS to the target vehicle CT is +10 km/h or higher, the vehicle controller 324 allows the own vehicle CS to enter a cut-in area CI1. Likewise, when a relative speed of the own vehicle CS to the target vehicle CT is +20 km/h or higher, the vehicle controller 324 allows the own vehicle CS to enter cut-in areas CI1 and CI2. Likewise, when a relative speed of the own vehicle CS to the target vehicle CT is +40 km/h or higher, the vehicle controller 324 allows the own vehicle CS to enter cut-in areas CI1 to CI3. Likewise, when a relative speed of the own vehicle CS to the target vehicle CT is +60 km/h or higher, the vehicle controller 324 allows the own vehicle CS to enter cut-in areas CI1 to CI4. Likewise, when a relative speed of the own vehicle CS to the target vehicle CT is +80 km/h or higher, the vehicle controller 324 allows the own vehicle CS to enter cut-in areas CI1 to CI5.

On the other hand, in a range from the target vehicle CT up to the cut-in prohibit distance CP, the vehicle controller 324 prohibits the own vehicle CS from cutting in ahead of the target vehicle CT, regardless of a relative speed of the own vehicle CS to the target vehicle CT.

The vehicle controller 324 prohibits the own vehicle CS from entering a disallowed cut-in area. Specifically, for example, when a relative speed of the own vehicle CS to the target vehicle CT is +50 km/h, the vehicle controller 324 prohibits the own vehicle CS from entering the cut-in areas CI4 and CI5. For example, it is assumed that, when a relative speed of the own vehicle CS to the target vehicle CT is +50 km/h, a driver operates the direction device 202 such as a steering device, and attempts to enter the cut-in area CI4 in front of the target vehicle CT. Then, the vehicle controller 324 controls the direction device 202 in such a way that the own vehicle CS does not enter the cut-in area CI4, and invalidates a driver's operation of the direction device 202 such as a steering device. Further, the vehicle controller 324 activates the alarm sound generator 203, and generates an alarm sound to the driver.

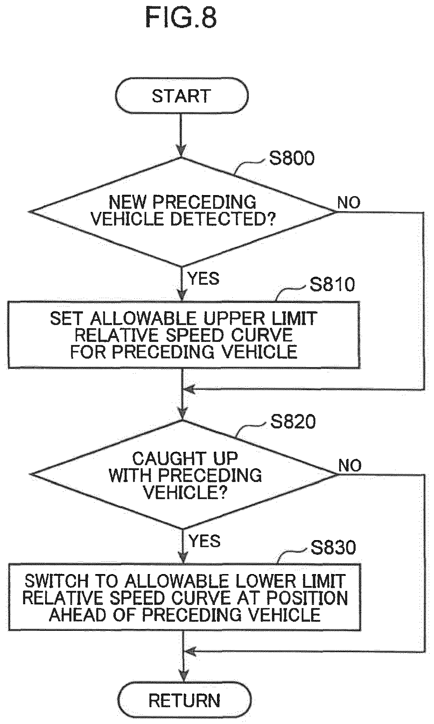

FIG. 8 is a flowchart schematically illustrating an example of a setting operation of an allowable relative speed curve of the vehicle 10. The operation illustrated in FIG. 8 is performed every predetermined time (e.g. 50 msec).

In Step S800, the object detector 321 determines whether or not a new preceding target vehicle (hereinafter, simply referred to as a "preceding vehicle") is detected. Specifically, the object detector 321 determines whether or not a preceding vehicle traveling on an adjacent lane adjacent to a driving lane on which the own vehicle CS is traveling is newly detected at a position ahead of the own vehicle CS, based on reception data indicating a reflection wave to be output from the front radar 101, the front right radar 102, and the front left radar 103, for example.

When a new preceding vehicle is not detected (NO in Step S800), the process proceeds to Step S820. On the other hand, when a new preceding vehicle is detected (YES in Step S800), the process proceeds to Step S810. In Step S810, the curve setting portion 323 sets an allowable relative speed curve around the preceding vehicle. The allowable relative speed curve represents an allowable upper limit relative speed, as described with reference to FIGS. 3 and 4.

In Step S820, the object detector 321 determines whether or not the vehicle 10 (own vehicle CS) has caught up with the preceding vehicle, based on reception data indicating a reflection wave to be output from the rear left radar 105, for example. When the vehicle 10 (own vehicle CS) has not caught up with the preceding vehicle (NO in Step S820), the process of FIG. 8 is finished. On the other hand, when the vehicle 10 (own vehicle CS) has caught up with the preceding vehicle (YES in Step S820), the process proceeds to Step S830.

In Step S830, the curve setting portion 323 sets an allowable lower limit relative speed, in place of an allowable upper limit relative speed, in an allowable relative speed curve set at a position ahead of the preceding vehicle. Thereafter, the process of FIG. 8 is finished.

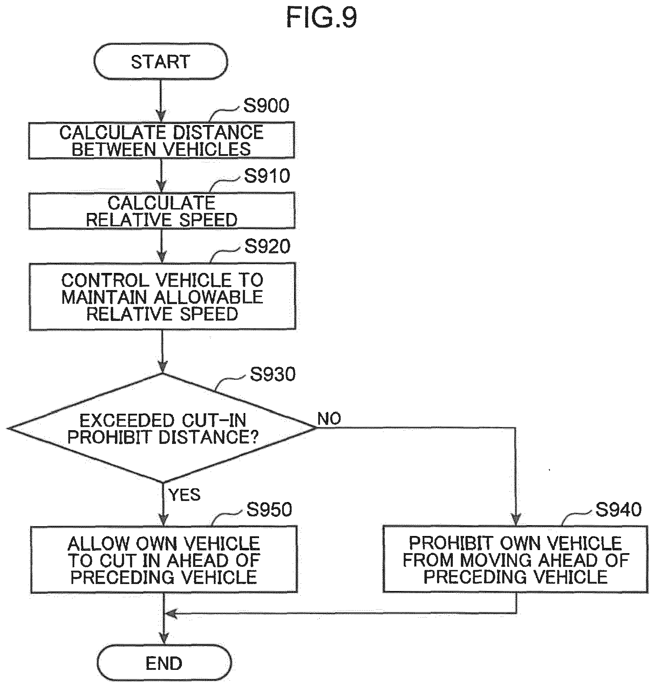

FIG. 9 is a flowchart schematically illustrating an example of an operation of cut-in control of the vehicle 10. The operation illustrated in FIG. 9 is performed every predetermined time (e.g. 50 msec).

In Step S900, the object detector 321 detects a distance between the vehicle 10 (own vehicle CS) and the preceding vehicle detected in Step S800 in FIG. 8, using reception data indicating a reflection wave to be output from each of the radars 101 to 105. In Step S910, the calculator 322 calculates a relative speed of the vehicle 10 (own vehicle CS) to the preceding vehicle detected in Step S800 in FIG. 8, based on a change in the distance detected in Step S900.

In Step S920, the vehicle controller 324 controls the vehicle 10 (own vehicle CS) in such a way that an allowable relative speed represented by an allowable relative speed curve set in Steps S810 and S830 in FIG. 8 is maintained by controlling the speed device 201, the direction device 202, and the like.

In Step S930, the object detector 321 determines whether or not a distance from the target vehicle CT to the vehicle 10 (own vehicle CS) has exceeded the cut-in prohibit distance CP. When the distance from the target vehicle CT to the vehicle 10 (own vehicle CS) does not exceed the cut-in prohibit distance CP (NO in Step S930), the process proceeds to Step S940. On the other hand, when the distance from the target vehicle CT to the vehicle 10 (own vehicle CS) has exceeded the cut-in prohibit distance CP (YES in Step S930), the process proceeds to Step S950.

In Step S940, the vehicle controller 324 prohibits the vehicle 10 (own vehicle CS) to cut in ahead of the target vehicle CT. Thereafter, the process of FIG. 9 is finished. In Step S950, the vehicle controller 324 allows the vehicle 10 (own vehicle CS) to cut in ahead of the target vehicle CT. Thereafter, the process of FIG. 9 is finished.

As described above, in the present embodiment, the curve setting portion 323 sets an allowable relative speed curve representing an allowable upper limit relative speed around the target vehicle CT traveling ahead of the own vehicle CS. As described with reference to FIG. 4, the allowable relative speed curve is set in such a way that a relative speed is reduced, as a distance to the target vehicle CT decreases. Therefore, it is possible to prevent the own vehicle CS from colliding with the target vehicle CT by causing the vehicle controller 324 to control the vehicle 10 in such a way as to maintain an allowable upper limit relative speed.

In addition, in the present embodiment, when the own vehicle CS catches up with the target vehicle CT, the curve setting portion 323 sets an allowable relative speed curve representing an allowable lower limit relative speed at a position ahead of the target vehicle CT. As described with reference to FIGS. 5 and 6, the allowable relative speed curve is set in such a way that a relative speed increases, as a distance to the target vehicle CT decreases. Therefore, the vehicle controller 324 controlling the vehicle 10 in such a way as to maintain an allowable lower limit relative speed, makes it possible to avoid that a driver of the target vehicle CT may feel uneasy, even if the own vehicle CS cuts in ahead of the target vehicle CT.

(Modified Embodiments)

The program stored in the memory 310 may include an interrupt flag indicating that the own vehicle is allowed to cut in ahead of the target vehicle CT or prohibited from cutting in ahead of the target vehicle CT. In this case, in Step S940, the vehicle controller 324 may reset the interrupt flag. In addition, in Step S950, the vehicle controller 324 may set the interrupt flag.

Further, in Step S920, when the interrupt flag is set, the vehicle controller 324 may control the speed device 201 and the direction device 202 to cause the vehicle 10 (own vehicle CS) to cut in ahead of the target vehicle CT, while causing the vehicle 10 to maintain the allowable relative speed set in Steps S810 and S830 in FIG. 8.

Furthermore, in Step S920, when the interrupt flag is reset, the vehicle controller 324 may control the direction device 202 so that the vehicle 10 (own vehicle CS) does not cut in ahead of the target vehicle CT, even if the driver attempts to drive the vehicle 10 (own vehicle CS) to cut in ahead of the target vehicle CT. Alternatively, when the interrupt flag is reset, the vehicle controller 324 may activate the alarm sound generator 203 to generate an alarm sound to the driver, when the driver attempts to drive the vehicle 10 (own vehicle CS) to cut in ahead of the target vehicle CT.

An aspect of the technique disclosed herein relates to a vehicle control apparatus for controlling traveling of an own vehicle, the vehicle control apparatus including:

a vehicle detector that detects a first target vehicle, and detects a first own vehicle distance between the first target vehicle and the own vehicle, the first target vehicle traveling on an adjacent lane adjacent to a driving lane on which the own vehicle is traveling in a same direction as the own vehicle;

a calculator that calculates a relative speed of the own vehicle to the first target vehicle, based on a change in the first own vehicle distance;

a curve setting portion that virtually sets a first curve at a position ahead of the first target vehicle, when the first target vehicle traveling on the adjacent lane is detected on a side of the own vehicle or behind the own vehicle, the first curve representing a lower limit relative speed determined in association with a distance from the first target vehicle; and

a vehicle controller that causes the own vehicle to travel at a relative speed not lower than a relative speed to the first target vehicle, which is determined by the first curve depending on the first own vehicle distance, when the own vehicle changes from the driving lane to the adjacent lane at a position ahead of the first target vehicle.

In this aspect, when the first target vehicle traveling on the adjacent lane on a side of the own vehicle or behind the own vehicle is detected, the first curve representing a lower limit relative speed determined in association with a distance from the first target vehicle is virtually set at a position ahead of the first target vehicle. When the own vehicle changes from the driving lane to the adjacent lane at a position ahead of the first target vehicle, the own vehicle is controlled to travel at a relative speed not lower than the relative speed to the first target vehicle determined by the first curve depending on the first own vehicle distance between the first target vehicle and the own vehicle. Therefore, according to this aspect, it is possible to avoid that a driver of the first target vehicle passed by the own vehicle may feel uneasy.

In the above-described aspect, for example, regarding the first curve, the relative speed may be determined in advance to be a first relative speed, when a distance from the first target vehicle is a first distance, and the relative speed may be determined in advance to be a second relative speed higher than the first relative speed, when a distance from the first target vehicle is a second distance shorter than the first distance.

In this aspect, regarding the first curve, when the distance from the first target vehicle is the second distance shorter than the first distance, the relative speed is determined in advance to be the second relative speed higher than the first relative speed. Therefore, according to this aspect, it is possible to avoid that a driver of the first target vehicle passed by the own vehicle may feel uneasy.

In the above-described aspect, for example, the vehicle detector may detect a second target vehicle traveling on the driving lane ahead of the own vehicle, and may detect a second own distance between the second target vehicle and the own vehicle. The calculator may calculate a relative speed of the own vehicle to the second target vehicle, based on a change in the second own vehicle distance. The curve setting portion may virtually set a second curve around the second target vehicle when the second target vehicle is detected, the second curve representing an upper limit relative speed determined in association with a distance from the second target vehicle. The vehicle controller may cause the own vehicle to travel at a relative speed not higher than the relative speed determined by the second curve depending on the second own vehicle distance.

According to this aspect, when the second target vehicle traveling on the driving lane ahead of the own vehicle is detected, the second curve representing an upper limit relative speed determined in association with a distance from the second target vehicle is virtually set around the second target vehicle. The own vehicle travels at a relative speed not higher than the relative speed determined by the second curve depending on the second own vehicle distance between the second target vehicle and the own vehicle. Therefore, according to this aspect, it is possible to drive the own vehicle safely, without colliding with the second target vehicle from behind.

In the above-described aspect, for example, regarding the second curve, the relative speed may be determined in advance to be a third relative speed, when a distance from the second target vehicle is a third distance, and the relative speed may be determined in advance to be a fourth relative speed lower than the third relative speed, when a distance from the second target vehicle is a fourth distance shorter than the third distance.

In this aspect, regarding the second curve, when a distance from the second target vehicle is the fourth distance shorter than the third distance, the relative speed to the second target vehicle is determined in advance to be the fourth relative speed lower than the third relative speed. Therefore, according to this aspect, it is possible to drive the own vehicle safely, without colliding with the second target vehicle from behind.

In the above-described aspect, for example, the curve setting portion may virtually set, at a position at least ahead of the first target vehicle, a relative speed zero area where the upper limit relative speed is zero. The vehicle controller may prohibit the own vehicle from changing from the driving lane to the adjacent lane in the relative speed zero area.

According to this aspect, the relative speed zero area where the upper limit relative speed is zero is virtually set at a position at least ahead of the first target vehicle. In the relative speed zero area, the own vehicle is prohibited from changing from the driving lane to the adjacent lane. Therefore, according to this aspect, it is possible to avoid that a driver of the first target vehicle passed by the own vehicle may feel uneasy.

**Claims**

1.  A vehicle control apparatus for controlling traveling of an own vehicle (CS), comprising:

    a vehicle detector (321) that detects a first target vehicle (CT), and detects a first own vehicle distance between the first target vehicle (CT) and the own vehicle (CS), the first target vehicle (CT) traveling on an adjacent lane (22) adjacent to a driving lane (23) on which the own vehicle (CS) is traveling in a same direction as the own vehicle (CS);

a calculator (322) that calculates a relative speed of the own vehicle (CS) to the first target vehicle (CT), based on a change in the first own vehicle distance;

**characterized by**

a curve setting portion (323) that virtually sets a first curve (CL11-CL14) at a position ahead of the first target vehicle (CT), when the first target vehicle (CT) traveling on the adjacent lane (22) is detected on a side of the own vehicle (CS) or behind the own vehicle (CS), the first curve (CL11-CL14) representing a lower limit relative speed determined in association with a distance from the first target vehicle (CT); and

a vehicle controller (324) that causes the own vehicle (CS) to travel at a relative speed not lower than a relative speed to the first target vehicle (CT), which is determined by the first curve (CL11-CL14) depending on the first own vehicle distance, when the own vehicle (CS) changes from the driving lane (23) to the adjacent lane (22) at a position ahead of the first target vehicle (CT).

2. The vehicle control apparatus according to claim 1, wherein

regarding the first curve (CL11-CL14), the relative speed is determined in advance to be a first relative speed, when a distance from the first target vehicle (CT) is a first distance, and the relative speed is determined in advance to be a second relative speed higher than the first relative speed, when a distance from the first target vehicle (CT) is a second distance shorter than the first distance.

3. The vehicle control apparatus according to claim 1 or 2, wherein

the vehicle detector (321) detects a second target vehicle (CT), and detects a second own distance between the second target vehicle (CT) and the own vehicle (CS), the second target vehicle (CT) traveling on the driving lane (23) ahead of the own vehicle (CS),

the calculator (322) calculates a relative speed of the own vehicle (CS) to the second target vehicle (CT), based on a change in the second own vehicle distance,

the curve setting portion (323) virtually sets a second curve (CL1-CL4) around the second target vehicle (CT) when the second target vehicle (CT) is detected, the second curve (CL1-CL4) representing an upper limit relative speed determined in association with a distance from the second target vehicle (CT), and

the vehicle controller (324) causes the own vehicle (CS) to travel at a relative speed not higher than the relative speed determined by the second curve (CL1-CL4) depending on the second own vehicle distance.

4. The vehicle control apparatus according to claim 3, wherein

regarding the second curve (CL1-CL4), the relative speed is determined in advance to be a third relative speed, when a distance from the second target vehicle (CT) is a third distance, and the relative speed is determined in advance to be a fourth relative speed lower than the third relative speed, when a distance from the second target vehicle (CT) is a fourth distance shorter than the third distance.

5. The vehicle control apparatus according to any one of claims 1 to 4, wherein

the curve setting portion (323) virtually sets, at a position at least ahead of the first target vehicle (CT), a relative speed zero area (PZ) where the upper limit relative speed is zero, and

the vehicle controller (324) prohibits the own vehicle (CS) from changing from the driving lane (23) to the adjacent lane (22) in the relative speed zero area (PZ).

**Patentansprüche**

1. Ein Fahrzeugsteuergerät zur Steuerung einer Fahrbewegung eines eigenen Fahrzeugs bzw. Eigenfahrzeugs (CS), das Folgendes umfasst:

einen Fahrzeugdetektor (321), der ein erstes Zielfahrzeug (CT) erfasst und einen ersten Eigenfahrzeugabstand zwischen dem ersten Zielfahrzeug (CT) und dem eigenen Fahrzeug (CS) erfasst, wobei das erste Zielfahrzeug (CT) in der gleichen Richtung wie das eigene Fahrzeug (CS) auf einer Nachbarspur (22) fährt, die an eine Fahrspur (23) angrenzt, auf der das eigene Fahrzeug (CS) fährt;

einen Rechner (322), der eine Relativgeschwindigkeit des eigenen Fahrzeugs (CS) zum ersten Zielfahrzeug (CT) auf der Grundlage einer Änderung des Abstands des ersten eigenen Fahrzeugs berechnet;

**gekennzeichnet durch**

einen Kurvenfestlegungsabschnitt (323), der virtuell eine erste Kurve (CL11-CL14) an einer Position vor dem ersten Zielfahrzeug (CT) festlegt, wenn das erste Zielfahrzeug (CT), das auf der Nachbarspur (22) fährt, auf einer Seite des eigenen Fahrzeugs (CS) oder hinter dem eigenen Fahrzeug (CS) erfasst wird, wobei die erste Kurve (CL11-CL14) eine untere Grenz-Relativgeschwindigkeit darstellt, die im Zusammenhang mit einem Abstand vom ersten Zielfahrzeug (CT) bestimmt wird; und
eine Fahrzeugsteuerung (324), die das eigene Fahrzeug (CS) dazu veranlasst, mit einer Relativgeschwindigkeit zu fahren, die nicht geringer ist als eine Relativgeschwindigkeit zum ersten Zielfahrzeug (CT), die bestimmt wird durch die erste Kurve (CL11-CL14) in Abhängigkeit vom ersten Abstand des eigenen Fahrzeugs, wenn das eigene Fahrzeug (CS) von der Fahrspur (23) auf die Nachbarspur (22) an einer Position vor dem ersten Zielfahrzeug (CT) wechselt.

2. Das Fahrzeugsteuergerät nach Anspruch 1, wobei bezüglich der ersten Kurve (CL11-CL14) die Relativgeschwindigkeit im Voraus als eine erste Relativgeschwindigkeit bestimmt wird, wenn ein Abstand vom ersten Zielfahrzeug (CT) ein erster Abstand ist, und wobei die Relativgeschwindigkeit im Voraus als eine zweite Relativgeschwindigkeit bestimmt wird, die höher als die erste Relativgeschwindigkeit ist, wenn ein Abstand vom ersten Zielfahrzeug (CT) ein zweiter Abstand ist, der kürzer als der erste Abstand ist.

3. Das Fahrzeugsteuergerät nach Anspruch 1 oder 2, wobei
der Fahrzeugdetektor (321) ein zweites Zielfahrzeug (CT) erfasst und einen zweiten eigenen Abstand zwischen dem zweiten Zielfahrzeug (CT) und dem eigenen Fahrzeug (CS) erfasst, wobei das zweite Zielfahrzeug (CT) auf der Fahrspur (23) vor dem eigenen Fahrzeug (CS) fährt,
der Rechner (322) eine Relativgeschwindigkeit des eigenen Fahrzeugs (CS) zum zweiten Zielfahrzeug (CT) berechnet, basierend auf einer Änderung des Abstands des zweiten eigenen Fahrzeugs,
der Kurvenfestlegungsabschnitt (323) virtuell eine zweite Kurve (CL1-CL4) um das zweite Zielfahrzeug (CT) herum festlegt, wenn das zweite Zielfahrzeug (CT) erfasst wird, wobei die zweite Kurve (CL1-CL4) eine obere Grenz-Relativgeschwindigkeit darstellt, die im Zusammenhang mit einem Abstand vom zweiten Zielfahrzeug (CT) bestimmt wird, und wobei die Fahrzeugsteuerung (324) die das eigene Fahrzeug (CS) dazu veranlasst, mit einer Relativgeschwindigkeit zu fahren, die nicht höher ist als die Relativgeschwindigkeit, die bestimmt wird durch die zweite Kurve (CL1-CL4) in Abhängigkeit vom Abstand des zweiten eigenen Fahrzeugs.

4. Das Fahrzeugsteuergerät nach Anspruch 3, wobei bezüglich der zweiten Kurve (CL1-CL4) die Relativgeschwindigkeit im Voraus als dritte Relativgeschwindigkeit bestimmt wird, wenn ein Abstand vom zweiten Zielfahrzeug (CT) ein dritter Abstand ist, und wobei die Relativgeschwindigkeit im Voraus als vierte Relativgeschwindigkeit bestimmt wird, die niedriger ist als die dritte Relativgeschwindigkeit, wenn ein Abstand vom zweiten Zielfahrzeug (CT) ein vierter Abstand ist, der kürzer ist als der dritte Abstand.

5. Das Fahrzeugsteuergerät nach irgendeinem der Ansprüche von 1 bis 4, wobei
der Kurvenfestlegungsabschnitt (323) an einer Position zumindest vor dem ersten Zielfahrzeug (CT) einen Bereich der Null-Relativgeschwindigkeit (PZ) virtuell festlegt, in dem die obere Grenz-Relativgeschwindigkeit Null ist, und wobei
die Fahrzeugsteuerung (324) verhindert, dass das eigene Fahrzeug (CS) im Bereich der Null-Relativgeschwindigkeit (PZ) von der Fahrspur (23) auf die Nachbarspur (22) wechselt.

## Revendications

1. Un appareil de commande de véhicule pour commander le déplacement du propre véhicule (CS), comprenant :

un détecteur de véhicule (321) qui détecte un premier véhicule cible (CT), et détecte une première distance de véhicule propre entre le premier véhicule cible (CT) et le propre véhicule (CS), le premier véhicule cible (CT) se déplaçant sur une voie adjacente (22), adjacente à une voie de conduite (23) sur laquelle le véhicule propre (CS) se déplace, dans une même direction que le propre véhicule (CS) ;
un calculateur (322) qui calcule une vitesse relative du propre véhicule (CS) par rapport au premier véhicule cible (CT), sur la base d'un changement de la première distance de véhicule propre ;
**caractérisé par**
une portion d'établissement de courbe (323) qui établit virtuellement une première courbe (CL11-CL14) à une position en avant du premier véhicule cible (CT), lorsque le premier véhicule cible (CT) qui se déplace sur la voie adjacente (22) est détecté sur un côté du propre véhicule (CS) ou derrière le propre véhicule (CS), la première courbe (CL11-CL14) représentant une vitesse relative limite inférieure déterminée en association avec une distance par rapport au premier véhicule cible (CT) ; et **par**
un dispositif de commande de véhicule (324) qui amène le propre véhicule (CS) à se déplacer à une vitesse relative non inférieure à une vitesse relative par rapport au premier véhicule cible (CT), qui est déterminée par la première courbe (CL11-CL14) en fonction de la première distance de véhicule propre, lorsque le propre véhicule (CS) passe de la voie de conduite (23) à la voie adjacente (22) à un endroit situé devant le premier véhicule cible (CT).

2. L'appareil de commande de véhicule d'après la revendication 1, sachant que
en ce qui concerne la première courbe (CL11-CL14), la vitesse relative est déterminée à l'avance comme étant une première vitesse relative, lorsqu'une distance par rapport au premier véhicule cible (CT) est une première distance, et que la vitesse relative est déterminée à l'avance comme étant une deuxième vitesse relative supérieure à la première vitesse relative, lorsqu'une distance par rapport au premier véhicule cible (CT) est une deuxième distance inférieure à la première distance.

3. L'appareil de commande de véhicule d'après la revendication 1 ou 2, sachant que
le détecteur de véhicule (321) détecte un deuxième véhicule cible (CT), et détecte une deuxième distance propre entre le deuxième véhicule cible (CT) et le propre véhicule (CS), le deuxième véhicule cible (CT) se déplaçant sur la voie de conduite (23) devant le propre véhicule (CS),
le calculateur (322) calcule une vitesse relative du propre véhicule (CS) par rapport au deuxième véhicule cible (CT), sur la base d'un changement de la deuxième distance de véhicule propre,
la portion d'établissement de courbe (323) établit virtuellement une deuxième courbe (CL1-CL4) autour du deuxième véhicule cible (CT) lorsque le deuxième véhicule cible (CT) est détecté, la deuxième courbe (CL1-CL4) représentant une vitesse relative limite supérieure déterminée en association avec une distance par rapport au deuxième véhicule cible (CT), et que
le dispositif de commande de véhicule (324) amène le propre véhicule (CS) à se déplacer à une vitesse relative qui n'est pas supérieure à la vitesse relative déterminée par la deuxième courbe (CL1-CL4) en fonction de la deuxième distance de véhicule propre.

4. L'appareil de commande de véhicule d'après la revendication 3, sachant que
en ce qui concerne la deuxième courbe (CL1-CL4), la vitesse relative est déterminée à l'avance comme étant une troisième vitesse relative, lorsqu'une distance par rapport au deuxième véhicule cible (CT) est une troisième distance, et que la vitesse relative est déterminée à l'avance comme étant une quatrième vitesse relative inférieure à la troisième vitesse relative, lorsqu'une distance par rapport au deuxième véhicule cible (CT) est une quatrième distance plus courte que la troisième distance.

5. L'appareil de commande de véhicule d'après l'une quelconque des revendications de 1 à 4, sachant que

la portion d'établissement de courbe (323) établit virtuellement, à une position au moins en avant du premier véhicule cible (CT), une zone de vitesse relative nulle (PZ) où la vitesse relative limite supérieure est nulle, et que
le dispositif de commande de véhicule (324) interdit au propre véhicule (CS) de passer de la voie de conduite (23) à la voie adjacente (22) dans la zone de vitesse relative nulle (PZ).

# FIG.1

<u>10</u>

| | |
|---|---|
| ~101 FRONT RADAR | ~300 ECU |
| ~102 FRONT RIGHT RADAR | ~310 MEMORY |
| ~103 FRONT LEFT RADAR | ~320 CPU |
| ~104 REAR RIGHT RADAR | ~321 OBJECT DETECTOR |
| ~105 REAR LEFT RADAR | ~322 CALCULATOR |
| ~106 CAMERA | ~323 CURVE SETTING PORTION |
| ~107 VEHICLE SPEED SENSOR | ~324 VEHICLE CONTROLLER |
| ~201 SPEED DEVICE | ~325 LANE DETECTOR |
| ~202 DIRECTION DEVICE | |
| ~203 ALARM SOUND GENERATOR | |

FIG.2

AR1

AR6

AR3

AR2

10(CS)

AR5

AR4

# FIG.3

# FIG.4

SECTION (A)

CL4

Δ40km/h
Δ30km/h
Δ20km/h
Δ10km/h

CL3

CL2

CL1

PZ

A-SECTION

CT

SECTION (B)

A-SECTION

RELATIVE SPEED
[km/h]    0
         10
         20
         30
         40

VS

         100
          VEHICLE CENTER

HORIZONTAL
DISTANCE DL[m]

# FIG.5

CL11
CL12
CL13
CL14

△10km/h
△20km/h
△30km/h
△40km/h

CS

CL1
CL2
CL3
CL4

CT

△10km/h
△20km/h
△30km/h
△40km/h

CS

FIG.6

# FIG.7

21

22

CI1

CI2

CI3

CI4

CI5

23

10

20

40

60

80

CP

CT

CS

# FIG.8

START

S800

NEW PRECEDING
VEHICLE DETECTED? — NO

YES

S810

SET ALLOWABLE UPPER LIMIT
RELATIVE SPEED CURVE
FOR PRECEDING VEHICLE

S820

CAUGHT UP
WITH PRECEDING
VEHICLE? — NO

YES

S830

SWITCH TO ALLOWABLE LOWER LIMIT
RELATIVE SPEED CURVE AT POSITION
AHEAD OF PRECEDING VEHICLE

RETURN

# FIG.9

START

S900

CALCULATE DISTANCE
BETWEEN VEHICLES

S910

CALCULATE
RELATIVE SPEED

S920

CONTROL VEHICLE TO
MAINTAIN ALLOWABLE
RELATIVE SPEED

S930

EXCEEDED CUT-IN
PROHIBIT DISTANCE?

NO

YES

S950

ALLOW OWN VEHICLE
TO CUT IN AHEAD OF
PRECEDING VEHICLE

S940

PROHIBIT OWN VEHICLE
FROM MOVING AHEAD OF
PRECEDING VEHICLE

END

REFERENCES CITED IN THE DESCRIPTION

**Patent documents cited in the description**

- DE 102014012781 A1

- JP 2016009200 A